# EUROPÄISCHE PATENTSCHRIFT

(11) **EP 2 142 455 B1**
(45) Veröffentlichungstag und Bekanntmachung des Hinweises auf die Patenterteilung: **15.04.2015**
(21) Anmeldenummer: 08748785.6
(22) Anmeldetag: 06.05.2008
(51) Int. Cl.: B65G 49/06

(54) **VORRICHTUNG UND VERFAHREN ZUM ERFASSEN UND ABSTELLEN VON STOSSEMPFINDLICHEN PLATTEN**
DEVICE AND METHOD FOR SEIZING AND SETTING DOWN IMPACT-SENSITIVE SHEETS
DISPOSITIF ET PROCÉDÉ POUR SAISIR ET DÉPOSER DES PLAQUES SENSIBLES AUX CHOCS

(30) Priorität: 08.05.2007 DE 102007021494
(43) Veröffentlichungstag der Anmeldung: 13.01.2010
(73) Patentinhaber: Grenzebach Maschinenbau GmbH, 86663 Asbach-Bäumenheim (DE)
(72) Erfinder: FRANZ, Roland, 86681 Fünfstetten (DE)
(74) Vertreter: Kindermann, Peter
(86) Internationale Anmeldenummer: PCT/DE2008/000759
(87) Internationale Veröffentlichungsnummer: WO 2008/135032

(56) Entgegenhaltungen:
- EP-A- 1 695 928
- DE-A1-102004 057 228
- JP-A- 6 227 655
- US-A- 4 673 325
- US-A- 5 632 595

## Beschreibung

Die Erfindung betrifft eine Vorrichtung und ein Verfahren zum maschinellen Erfassen und versandfertigen Abstellen von stoßempfindlichen Platten unterschiedlichen Formats auf einer Stapelanordnung.

Die Herstellung und der Vertrieb von Platten aus unterschiedlichen Materialien erfordern spezielle Sorgfalt wenn es sich um große und dünne Platten handelt. Ein besonders empfindlicher Werkstoff ist in dieser Hinsicht Glas.

Flachglas, das zu Fensterscheiben oder Autoscheiben verarbeitet wird, ist trotz seiner allgegenwärtigen Selbstverständlichkeit, einer der erstaunlichsten Werkstoffe unserer Zeit. Im Unterschied zu Hohlglas hat es einige Jahrtausende länger gedauert, bis es den Glasmachern im Mittelalter gelang, flache Glastafeln zu erzeugen, die für Fenster verwendet werden konnten.

Die Entwicklung des so genannten Floatglas - Verfahrens im Jahre 1959 war der bislang letzte Meilenstein in der Flachglasherstellung. "Float" bedeutet soviel wie obenauf schwimmen oder treiben. Das Neuartige am Float - Verfahren besteht in dem so genannten "Float - Band". Es besteht aus geschmolzenem Zinn. Dieses Zinnbad ist etwa 4 bis 8 Meter breit und bis zu 60 Meter lang. Bei diesem Verfahren schwimmt das flüssige Glas auf dem ideal ebenen flüssigen Zinn. Wenn die Glasmasse aus dem Schmelzofen auf das Zinnbad gezogen wird, hat das Zinn eine Temperatur von 1000 °C. Am Ende des Zinnbades, wenn das jetzt erstarrte Glasband die Zinnwanne verlässt, liegt die Temperatur des Zinns bei 600°C. Zinn ist das einzige Metall, das die für dieses Verfahren notwendigen Voraussetzungen erfüllt, bei 600°C bereits flüssig zu sein und bei 1000°C noch keinen störenden Dampfdruck zu entwickeln.

Nachdem das erstarrte Glasband nach dem Verlassen der Zinnwanne in die benötigten Formate unterteilt wurde, müssen die so erhaltenen Glasflächen für den Weitertransport gestapelt werden.

Aus der DE - AS 1 259 783 ist eine Vorrichtung zum Ablegen und Wiederaufnehmen von Platten, Tafeln oder dergleichen Gegenständen aus Glas bekannt mit einem gitterförmigen Schwenkrahmen, der in einer horizontalen Stellung mit seinen Trägerstäben zwischen Rollen eines Rollganges greift. Dieser Schwenkrahmen ist aus seiner horizontalen Lage um eine einseitig zum Rollgang gelegene horizontale, zu den Rollenachsen des Rollganges senkrechte, Achse ausschwenkbar und trägt an der, seiner Schwenkachse abgewandten, Seite Greifer zum Halten der Gegenstände. Dieser Vorrichtung liegt im Wesentlichen die Aufgabe zugrunde Gegenstände vom Schwenkrahmen aus einer horizontalen Stellung auf einem Rollgang sowohl in horizontaler Stellung auf einem Kasten, als auch in im Wesentlichen vertikaler Stellung auf einem Gestell seitlich neben dem Rollgang abzusetzen.

Zur Lösung dieser Aufgabe ist in der DE - AS 1 259 783 vorgesehen, dass als Greifer zumindest eine als Ganzes um eine zur Schwenkachse des Rahmens parallele Achse schwenkbare Greiferzange am Schwenkrahmen angelenkt ist, deren Greiferbacken zur Stütze des Schwenkrahmens symmetrisch gegenläufig beweglich sind und dass der Schwenkrahmen in seiner Ebene und parallel zwischen seinen Trägerstäben angeordnete, zu der seiner Schwenkachse zugewandten Seite hin aus- und einfahrbare Verlängerungsträger aufweist.

Mit dieser bekannten Vorrichtung werden zwar auch stoßempfindliche Platten auf einer Stapelanordnung abgestellt, jedoch erfolgt dieser Vorgang noch ohne die Verwendung eines mehrachsigen Roboterarms.

Aus der De - AS 17 56 787 ist eine Vorrichtung zum Umsetzen von Glastafeln zwischen einem Förderer und einem Lagerbock, auf welchem die die Glastafeln hochkant gestapelt werden, bekannt, bei der im Wesentlichen ein, die zu stapelnden Glastafeln aufnehmender, Stützrahmen, der Halteköpfe für die untere Seite der Glastafeln aufweist, auf einem fahrbaren Schlitten angeordnet ist, wobei die Halteköpfe unter die Auflagerebene der Glastafeln absetzbar sind.

Hier stellt sich die Aufgabe, eine Vorrichtung zum Entstapeln von Glastafeln zu schaffen, die es ermöglicht, auch bruchempfindliche Glastafeln, die auf einem Lagerbock gestapelt sind, in schneller Folge auf einen Förderer umzusetzen, der die Glastafeln in waagrechter Lage aufnimmt.

Zur Lösung dieser Aufgabe ist in der DE - AS 17 66 787 vorgesehen, dass der Stützrahmen oberhalb seiner Quermittellinie frei hängend an einem am Schlitten angeordneten Rahmenträger angelenkt ist und zwischen dem Rahmenträger und dem Stützrahmen eine den Stützrahmen in seiner Neigung der gestapelten Glastafel entgegengesetzten leichten Schrägstellung nachgiebig haltende Haltevorrichtung angeordnet ist, die beim Anstoßen der Halteköpfe eine dadurch eingeleitete Schwenkbewegung des Rahmens über die Senkrechte hinaus zulässt.

Hier ist zwar er Stützrahmen ebenfalls frei hängend, jedoch erfolgt der Vorgang des Umladens der Glasplatten im Wesentlichen aus der vertikalen Stellung in eine horizontale Stellung. Auch hier ist keine Greifvorrichtung in der Art eines mehrachsigen Roboters vorgesehen.

Aus der DE 10 2004 057 228 A1 ist als am nächsten kommender Stand der Technik ein Verfahren und eine Vorrichtung zum Stapeln von auf einem Plattenförderer herangeführten Platten, insbesondere Glasplatten, mit hoher Geschwindigkeit, bekannt, dem die Aufgabe zugrunde liegt, eine Möglichkeit zur schnelleren Stapelung solcher Platten zu ermöglichen.

Zur Lösung dieser Aufgabe wird im Verfahren nach Anspruch 1 beansprucht, dass an einer Stapelstation die jeweilige Platte durch Erzeugen eines Saugdrucks an der Plattenoberseite etwas vom Plattenförderer abgehoben, sodann unter Beibehaltung des auf die Plattenoberseite wirkenden Saugdrucks ebenfalls an der Plattenoberseite reibschlüssig oder anderweitig erfasst und vom Plattenförderer weg an eine Position über einem Stapeltisch bewegt und dort durch Lösen des Saugdrucks und / oder durch mechanischen Druck auf die Plattenoberseite entgegen der Wirkung der Saugkraft auf dem Plattentisch abgelegt wird, wobei der Stapeltisch nach Ablegen jeder Platte um eine Plattendicke abgesenkt wird.

Die auf dem Stapeltisch abgelegten Plattenstapel können nunmehr von einer nachgeordneten Übernahmevorrichtung in der Form eines Horizontalförderers weiterbefördert werden der eine seitlich verfahrbare Gabel mit Zinken aufweist, die zur Übernahme des Plattenstapels unter diesen einfahrbar sind und durch Zwischenräume des Stapeltisches den Stapel aufnehmen und sodann von der Stapeltischposition weg verfahrbar sind.

Eine andere Möglichkeit besteht in der Ausgestaltung der Übernahmevorrichtung mit Organen zum Erfassen des Plattenstapels an dessen Oberseite. Eine weitere Möglichkeit besteht in der Ausgestaltung der dem Stapeltisch nachgeordneten Übernahmevorrichtung derart, dass sie den jeweils aufgestapelten Plattenstapel vom Stapeltisch abnimmt und mit einem Übergaberoboter in stehender Position auf ein Stapelgestell überführt, wobei der Übergaberoboter einen Greifermechänismus aufweist, der den Plattenstapel Bereich von dessen oberem Rand ergreift. Die letztgenannte Art der Lagerung bietet für den Transport der Plattenstapel an weiterverarbeitende Kunden die besten Möglichkeiten da sie den Zugriff auf Plattenstapel unterschiedlicher Formate ermöglicht. Die Erhöhung der Produktivität erfordert jedoch eine Beschleunigung der Umschlagzeit sowie eine gleichzeitige wünschenswerte Erniedrigung der Bruchrate.

Bei dieser bekannten Stapelvorrichtung weist eine Steuerungsvorrichtung in der Art eines mehrachsigen Roboterarms eine Greifvorrichtung und Mittel zum mechanischen Ergreifen der Platten auf.

Eine besondere Ausgestaltung dieser Greifvorrichtung weist die Vorrichtung aus der DE 10 20004 057 228 A1 nicht auf.

Aus der den Oberbegriff des Patentanspruchs 1 bildenden Druckschrift US 5 632 595 A ist eine Vorrichtung zum maschinellen Erfassen und versandfertigen Abstellen von stoßempfindlichen Platten, wie Flachglas, unterschiedlichen Formats auf mindestens eine Stapelanordnung bekannt, wobei eine Steuerungsvorrichtung in der Art eines mehrachsigen Roboterarms eine Greifvorrichtung und Mittel zum mechanischen Ergreifen der Platten aufweist, die Greifvorrichtung Mittel zum Bestimmen der Lagekoordinaten des Stellplatzes aufweist und die Greifvorrichtung Mittel zum Heranführen und Absetzen der Platten an den Abstellplatz aufweist.

Ferner ist aus der Druckschrift EP 1 695 928 A eine Vorrichtung zum Transport von flächigen Erzeugnissen bekannt, wobei die flächigen Erzeugnisse aus geneigten Rahmen einer Parkstation in geneigte Rahmen einer Lagerstation oder Speichereinheit mittels Fördermitteln und Greifern transportiert werden.

Der vorliegenden Patentanmeldung liegt die Aufgabe zugrunde, eine Vorrichtung und ein Verfahren anzugeben, die das optimale Stapeln von stoßempfindlichen Platten ermöglicht.

Erfindungsgemäß wird diese Aufgabe hinsichtlich der Vorrichtung durch die Merkmale des Patentanspruchs 1 und hinsichtlich des Verfahrens durch die Maßnahmen des Patentanspruchs 13 gelöst.

In den Unteransprüchen sind weitere vorteilhafte Ausgestaltungen der Erfindung gekennzeichnet.

Die Erfindung wird anhand der folgenden Figuren näher beschreiben.

Es zeigen im Einzelnen:
Figur 1: die Bestandteile der Greifvorrichtung im Querschnitt
Figur 2: einige charakteristische Greifvorgänge
Figur 3: die Schwenkzylinder für die Klemmbacken
Figur 4:den Querschnitt einer Klemmbacke
Figur 5: die Verschiebeeinheit der Klemmbacken in der Draufsicht
Figur 6: Details der Verschiebeeinheit in einer Schnittzeichnung
Figur 7: die Funktion in der Fertigungslinie

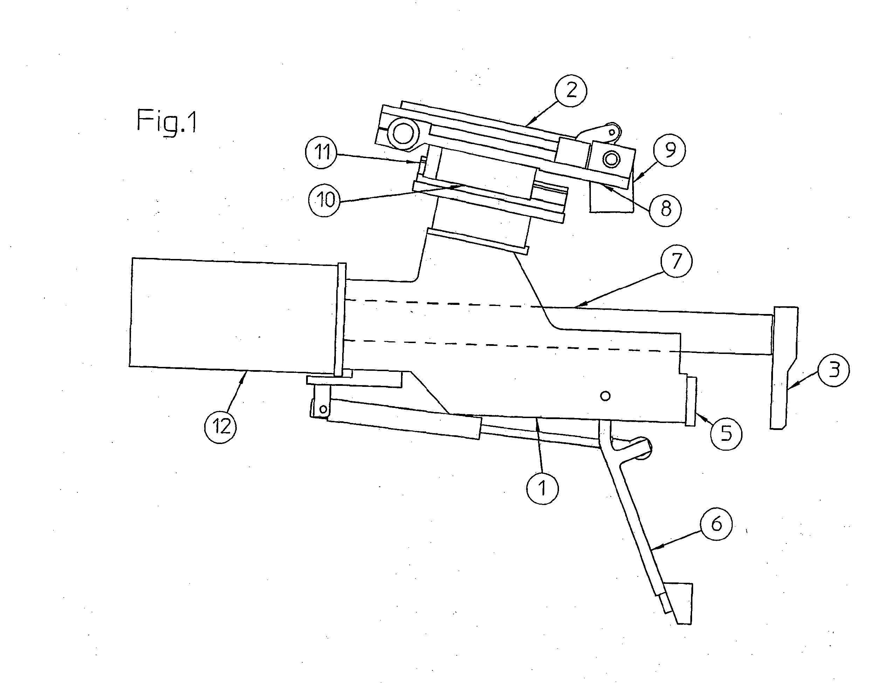

In der Figur 1 sind im Querschnitt, von der Seite der linken Klemmbacke (7) her gesehen, Teile der Greifvorrichtung dargestellt.

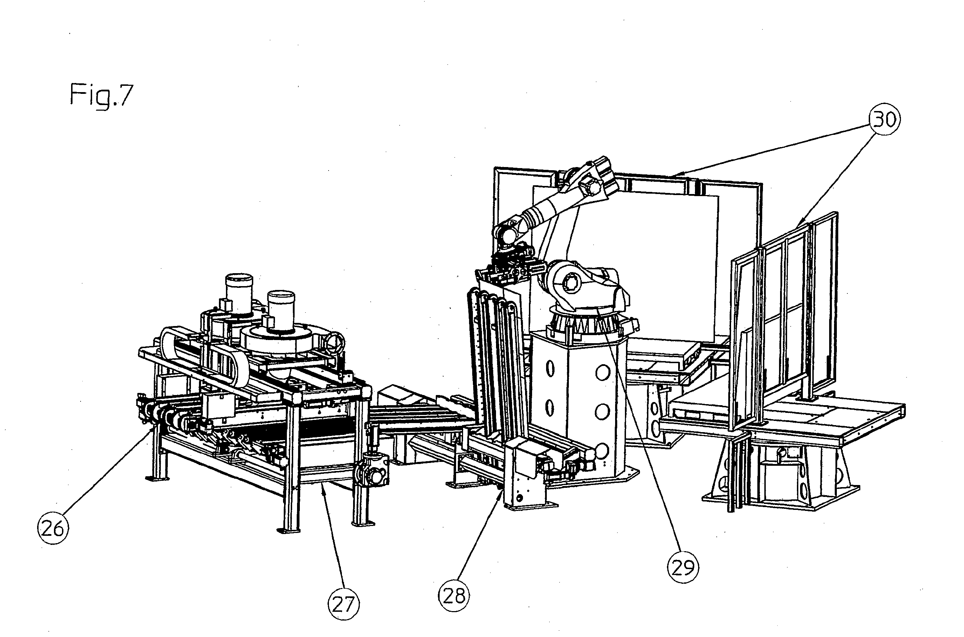

Das Chassis (1) der Greifvorrichtung der Vorrichtung ist über den Flansch (2) mit einem mehrachsigen Roboterarm verbunden, der hierbei nicht dargestellt ist, jedoch in der Zusammenschau aus der Figur 7 zu entnehmen ist.

Mit dem Flansch (2) ist die Kippplatte (8) über eine stabile Drehachse D, die in der Figur 1 im Querschnitt in der Form zweier konzentrischer Kreise dargestellt ist, verbunden und kann über diese Drehachse in Relation zum Flansch (2) gekippt werden. Die Bewegung dieses Kippvorgangs erfolgt über die Steuerung der Kippzylinder (9) die jeweils einer Klemmbacke (3) bzw. (4) lagemäßig zugeordnet sind.

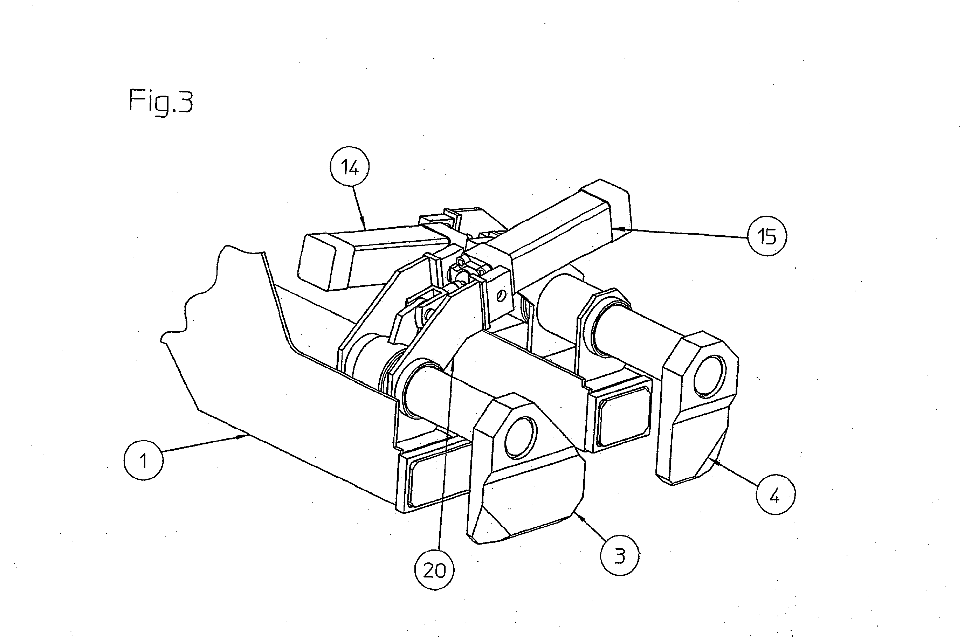

Zwischen der, in diesem gezeigten Fall, linken Klemmbacke (3) und deren Klemmbackenauflage (5) wird das zu erfassende Paket der zu befördernden Platten über die Klemmbackenstange (7) eingeklemmt. Die hierzu aufzuwendende Kraft wird über den Arbeitszylinder (12) aufgebracht. Die Lage der zugehörenden rechten Klemmbacke (4) ist aus der perspektivischen Darstellung der Figur 3 zu ersehen. Diese rechte Klemmbacke (4) besitzt einen eigenen weiteren Arbeitszylinder (12).

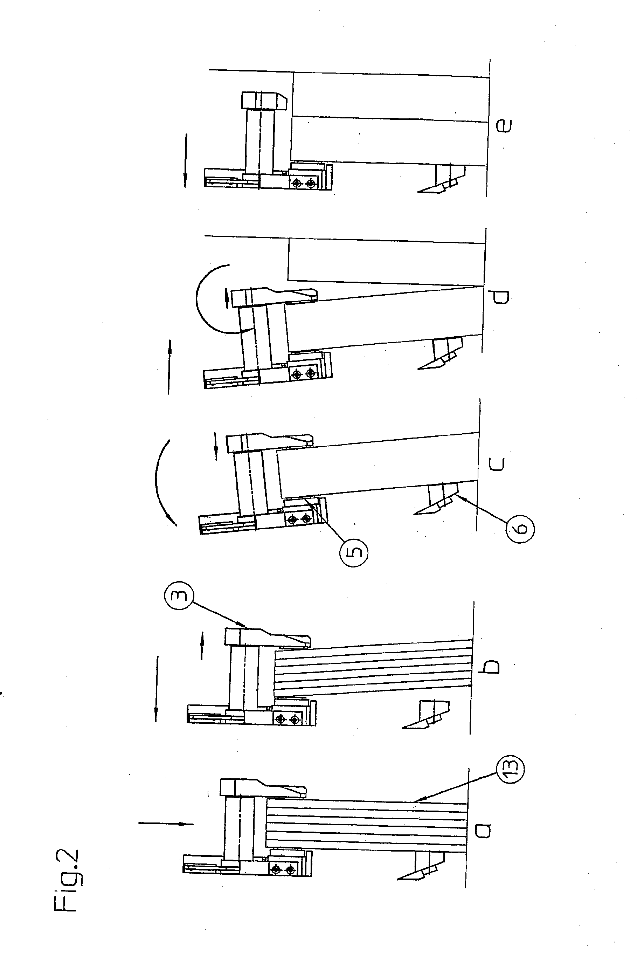

Der hydraulisch betätigte Andrückfinger (6), der auch mehrfach ausgeführt sein kann, stabilisiert die in den Klemmbacken (3) und (4) eingeklemmten Platten in ihrer Lage. Dies ist besonders bei großen Platten wichtig und wird bei den Ausführungen zur Figur 2 näher erläutert.

Ein Bestandteil der Vorrichtung sind die integrierten Verschiebeschlitten (10). Der gesamte Greifer ist über diese, jeder Klemmbacke separat zugeordnete, Verschiebeschlitten (10) in Bezug zur Ebene des Roboterflansches (2) unter einem leichten Anstellwinkel geneigt, das heißt leicht nach vorn hängend, befestigt. Diese konstruktive Maßnahme bietet zwei wesentliche Vorteile.

Zum einen stellt diese Maßnahme einen Kollisionsschutz dar. Denn bei einer unbeabsichtigten Kollision kann das gesamte Chassis (1) in einem bestimmten Bereich relativ zu einer bestimmten Position des Roboterarms zurückweichen und sich gleichzeitig um die oben erwähnte stabile Drehachse D drehen. Hierzu müssen lediglich die Verschiebeschlitten (10) gegen eine einstellbare Federkraft verschoben werden und die durch die Kippzylinder (9) aufgebaute Gegenkraft überwunden werden.

Zum anderen bietet diese Maßnahme die Möglichkeit zum lagegenauen und sanften Anfahren des Plattenpakets im Greifer an bereits abgestellte Pakete. Hiermit wird erreicht, dass die Pakete einerseits nicht durch unbeabsichtigt hohe Anstellkräfte aufeinander gepresst und zerstört werden, und andererseits die Pakete ohne unerwünschten Zwischenraum hintereinander gestapelt werden können.

Den in der Figur 2 dargestellten charakteristischen Greifvorgängen geht das Heranfahren der Vorrichtung an ein Glaspaket (13) voraus. Zu diesem Zweck werden die Schlitten (10) pneumatisch entriegelt, sodass der gesamte Greifer in seiner vorderen, durch die konstruktiv bewirkte Schräge des Flansches (2) vorgegebenen, über die Schwerkraft stabilisierten, Stellung gehalten wird. Die Klemmbacken (3) und (4) werden dann nach oben gedreht und der Greifer auf das zu transportierende Glaspaket (13) zu bewegt.

Kommt nun der Greifer beim Heranfahren in Kontakt mit dem abgestellten Glaspaket (13), so schiebt dieses den Greifer, bzw. die Klemmbackenauflagen (5), entgegen der Fahrtrichtung nach hinten bis die Roboterbewegung gestoppt und die erreichte Position gespeichert wird.

Die Klemmbacken (3) und (4) werden nach unten gedreht, das Glaspaket (13) wird eingeklemmt und über den erreichten Abstand der Klemmbacken zur Klemmbackenauflage wird die Dicke des Glaspakets (13) ermittelt (Fig.2,a) Nach dem Heranführen der zu transportierenden Platten in die Nähe des endgültigen Abstellplatzes werden diese nahezu stoßfrei abgesetzt.

Zu diesem Zweck wird nach dem Lockern der Spannzangen (3) bzw. (4) die Greifvorrichtung um eine bestimmte Wegstrecke in die Richtung die vom Aufstellort wegführt, zurückgefahren und dadurch wird das Glaspaket (13) von den Spannzangen um einen kleinen Winkel gekippt. Die jeweilige Wegstrecke die die Greifvorrichtung zurückfährt richtet sich nach der vorher ermittelten Dicke des Glaspakets (13) und ist programmtechnisch vorgegeben. (Fig.2,b).

Um eine Auffächerung des schräg gestellten Glaspakets (13) zu verhindern werden ein oder mehrere Andrückfinger (6) an die unteren Flächenteile des jeweiligen Glaspakets (13) bewegt. Gleichzeitig wird der Greifer so geschwenkt, dass die Klemmbacken (3) bzw. (4) parallel zur Oberfläche des schräg stehenden Glaspakets (13) ausgerichtet sind (Fig.2c). In der Folge wird das Glaspaket (13) von den Klemmbacken (3) und (4) mit einem bestimmten Anpressdruck erfasst und zusammen mit einem Andrückfinger (6) an die Unterkante der Rückwand des Anstellbehälters gesetzt. Die entsprechenden Lagekoordinaten wurden vorher ermittelt (Fig.2c).

Die Klemmbacken werden sodann aus dem Aufstellbereich nach oben verschwenkt und das Glaspaket (13) von den Klemmbackenauflagen (5) in die Endposition gedrückt Fig.2e). Durch dieses verfahren ist gewährleistet, dass die Glasplatten so dicht wie möglich aneinander stehen.

In der Figur 3 sind die Klemmbacken (3) und (4) mit ihrer jeweiligen Schwenkvorrichtung dargestellt. Der Schwenkzylinder (14) ist für den Schwenkvorgang der rechten Klemmbacke (4), der Schwenkzylinder (15) für die Verschwenkung der linken Klemmbacke (3) eingerichtet. In der perspektivischen Ansicht ist weiter die Halterung (20) des Schwenkzylinders (15) und ein Teil des Chassis (1) zu erkennen.

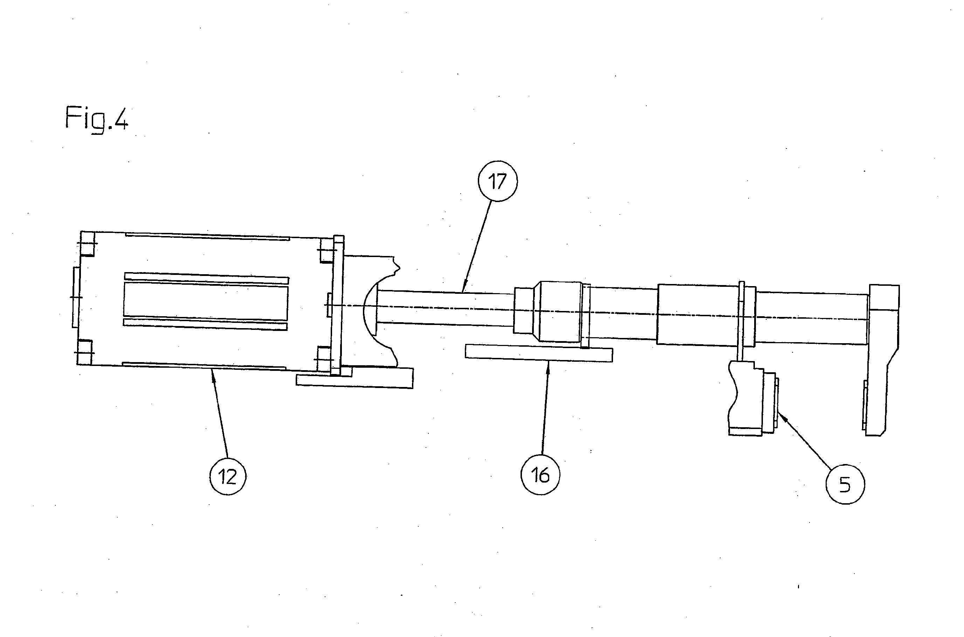

In der Figur 4 sind die im Wirkzusammenhang mit einer Klemmbacke stehenden Funktionselemente dargestellt. Der Arbeitszylinder (12) bewegt hier über die Kolbenstange (17) die betreffende Klemmbacke (3), bzw. (4), je nach Bedarf vor oder zurück. Die Dicke des dabei zwischen der jeweiligen Klemmbacke und der betreffenden Klemmbackenauflage (5) erfassten Glasstapels (13) wird durch die Dicken - Messeinrichtung (16) erfasst und datentechnisch weiterverarbeitet.

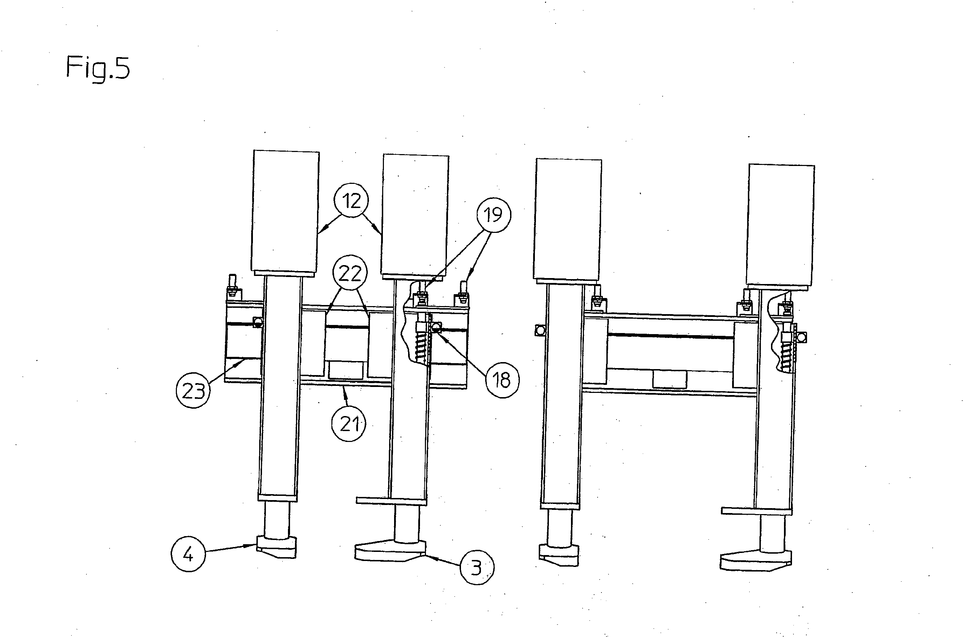

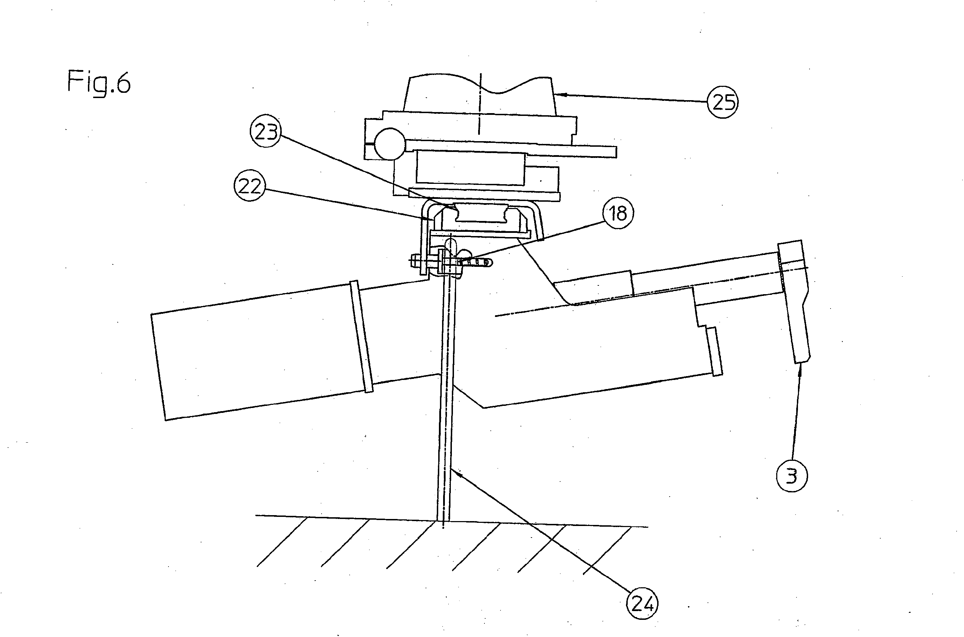

In der Figur 5 sind die jeder Klemmbacke zugeordneten Verschiebeschlitten (22) in der Draufsicht zu erkennen. In der linken Darstellung ist der Abstand der beiden Verschiebeschlitten (22) gering, in der rechten Darstellung ist ein entsprechend größerer Griffbereich der Klemmbacken (3) und (4) dargestellt. Auch hier sind die jeweiligen den Klemmbacken zugeordneten Arbeitszylinder (12) zu erkennen. Beide Verschiebeschlitten (22) sind auf der Traverse (21) für die Verschiebeeinrichtung über die Verschiebeschiene (23) geführt. Die Verschiebeschlitten (22) sind über die jeweilige Verriegelung (18) in ihrer Lage fixiert. In der linken als auch in der rechten Darstellung der Figur 5 sind "aufgebrochene Detailzeichnungen" im Bereich der Verriegelungen (18) gezeigt. Eine dieser Verriegelungen ist in der Seitenansicht der Figur 6 zu erkennen.

Der Einsatz eines Entriegelungsfingers (24) bewirkt hierbei ein Aufheben der federbelasteten Verriegelung des jeweiligen Verschiebeschlittens (22) und in Verbindung mit einer entsprechenden horizontalen Bewegung des Roboters (29) eine Bewegung des Verschiebeschlittens an die gewünschte Stelle. Zu diesem Zweck muss der Greifer in eine statische Umrüstvorrichtung fahren und die Klemmbacken nacheinander in ihrer Breite verstellen. Ein Entfernen des Entriegelungsfingers (24) fixiert die so erreichte Stellung des jeweiligen Verschiebeschlittens (22). Die Positionssensoren (19) registrieren die Stellung der Verschiebeschlitten (22) und stellen somit die Grundlage für die datentechnische Erfassung ihrer Stellung dar.

Die Figur 6 zeigt Details des Mechanismus der Verschiebung der Klemmbacken in einer Seitenansicht. Zusätzlich ist hierbei der Roboterarm (25) angedeutet.

In der Figur 7 ist die Position der Vorrichtung im Verbund mit der gesamten Fertigungslinie dargestellt. Auf die Ausrichteinheit (26) mit der die einzelnen Plattenformate ausgerichtet werden, folgt die Stapeleinheit (27) und die Übergabeeinheit (28) von der die zum Transport zu richtenden Glaspakete abgenommen werden. Vom Roboter (29) können dann die Glasstapel auf verschiedene Stapelgestelle (30) verteilt werden.

Da es für die Weiterverarbeitung der einzelnen Glasplatten eine große Rolle spielen kann mit welcher Oberseite sie auf dem jeweiligen Stapelgestell (30) positioniert werden, kann der Roboter (29) die auf der Übergabeeinheit (28) aufgestellten Platten von der Vorderseite oder der Hinterseite her greifen. Denn jede Glasplatte hat aufgrund ihrer Herstellung auf einem flüssigen Zinnbad eine so genannte Badseite und eine so genannte Luftseite. Für eine nachfolgende Beschichtung, gleich welcher Art, kann meist nur die Luftseite verwendet werden.

Der Greifer kann so schmal gehalten werden, dass die Glaspakete auf drei verschiedene Arten, nämlich von oben und von jeweils einer Seite, gegriffen und zusätzlich noch gedreht werden können, was insgesamt sechs verschiedene Arten des Zugriffs auf die Glaspakete ergibt.

Ist zusätzlich noch eine bestimmte Orientierung von Glasplatten erforderlich, kann dies vom Roboter (29) durch eine entsprechende Drehung um 90 Grad in der Vertikalen berücksichtigt werden.

Die Greifvorrichtung kann zur Gewichtsersparnis aus leichtgewichtigen Materialien wie zum Beispiel Aluminium, GFK oder Titan bestehen. Das somit eingesparte Gewicht kann in der Folge für eine elektromechanische Verschiebevorrichtung der Schlitten (22) investiert werden. Dies ermöglicht ein schnelleres Verstellen der jeweils benötigten Klemmbacken - Breite.

Zur schnelleren Erfassung von unterschiedlichen Plattenformaten können auch zwei lösungsgemäße Vorrichtungen verwendet werden, wobei eine solche Vorrichtung bevorzugt für das Erfassen von größeren Paketen eingerichtet ist, und eine andere dagegen für das Erfassen von kleineren Platten.

### Bezugszeichenliste

- (1): Chassis
- (2): Flansch für Roboterarm
- (3): linke Klemmbacke
- (4): rechte Klemmbacke
- (5): Klemmbackenauflage
- (6): Andrückfinger
- (7): Klemmbackenstange
- (8): Kippplatte
- (9): Kippzylinder
- (10): Verschiebeschlitten
- (11): Schiene
- (12): Arbeitszylinder für Klemmbacken
- (13): Glaspaket
- (14): rechter Schwenkzylinder für Klemmbacken
- (15): linker Schwenkzylinder für Klemmbacken
- (16): Dicken - Messeinrichtung
- (17): Kolbenstange eines Arbeitszylinders
- (18): Verriegelung
- (19): Positionssensoren
- (20): Halterung eines Schwenkzylinders
- (21): Traverse für die Verschiebeeinrichtung
- (22): Verschiebeschlitten
- (23): Verschiebeschiene
- (24): Entriegelungsfinger
- (25): Roboterarm, Steuerungsvorrichtung
- (26): Ausrichteinheit
- (27): Stapeleinheit
- (28): Übergabeeinheit
- (29): Roboter
- (30): Stapelgestell

## Patentansprüche

1. Vorrichtung zum maschinellen Erfassen und versandfertigen Abstellen von stoßempfindlichen Platten, wie Flachglas, unterschiedlichen Formats auf mindestens eine Stapelanordnung, wobei eine Steuerungsvorrichtung in der Art eines mehrachsigen Roboterarms eine Greifvorrichtung und Mittel zum mechanischen Ergreifen der Platten aufweist, die Greifvorrichtung Mittel zum Bestimmen der Lagekoordinaten des Stellplatzes aufweist und die Greifvorrichtung Mittel zum Heranführen und Absetzen der Platten an den Abstellplatz aufweist,
**dadurch gekennzeichnet, dass**
a) die Greifvorrichtung über eine einstellbare Dämpfungsvorrichtung (9) in geneigter Stellung hängend an der Steuerungsvorrichtung angelenkt ist,
b) die Greifvorrichtung Schlitten (22) zum Verschieben der Mittel zum mechanischen Ergreifen der Platten aufweist,
c) die Greifvorrichtung Mittel zur Bestimmung der geometrischen Abmessungen der zu erfassenden Platten und zur Bestimmung ihres Stellplatzes aufweist.

2. Vorrichtung nach Anspruch 1,
**dadurch gekennzeichnet,**
**dass** zum mechanischen Ergreifen der Platten mindestens eine Klemmbacke (3, 4) in Verbindung mit einer Klemmbackenauflage (5) vorgesehen ist

3. Vorrichtung nach Anspruch 2:
**dadurch gekennzeichnet,**
**dass** die Klemmbackenauflagen (5) auf einer oder beiden Seiten mit einer Schicht belegt sind, die aus einem Verbund aus Moosgummi, oder einem im Elastizitätsverhalten ähnlichen Werkstoff, und einem Kunststoff besteht, wobei der Kunststoff die unmittelbare Berührungsfläche mit den Platten darstellt.

4. Vorrichtung nach einem der Ansprüche 1 bis 3 **dadurch gekennzeichnet,**
**dass** die Greifvorrichtung an der Steuerungsvorrichtung unter einem Winkel von 5 Grad bis 20 Grad, vorzugsweise 7 Grad bis 10 Grad kippbar angelenkt ist.

5. Vorrichtung nach Anspruch 4,
**dadurch gekennzeichnet,**
**dass** die einstellbare Dämpfungseinrichtung (9) zumindest einen Großteil des Gewichts der Greifvorrichtung übernehmen kann.

6. Vorrichtung nach einem der Ansprüche 2 bis 5,
**dadurch gekennzeichnet,**
**dass** die Schlitten (22) zum Verschieben der Klemmbacken (3) und / oder (4) durch Bewegungen des Roboterarms (25) entriegelt und / oder fixiert werden.

7. Vorrichtung nach einem der Ansprüche 1 bis 6,
**dadurch gekennzeichnet,**
**dass** sie Sensoren zum Erfassen aller für die anfallenden Bewegungsabläufe erforderlichen Daten aufweist.

8. Vorrichtung nach Anspruch 7,
**dadurch gekennzeichnet,**
**dass** die Sensoren Ultraschallsensoren und / oder auf elektromagnetischen Prozessen basierende Sensoren und / oder mit elektromagnetischen Wellen operierende Sensoren sind.

9. Vorrichtung nach einem der Ansprüche 1 bis 8,
**dadurch gekennzeichnet,**
**dass** die Greifvörrichtung ganz oder in Teilen zur Gewichtsreduzierung aus leichtgewichtigen Materialien wie GFK, Aluminium oder Titan besteht.

10. Vorrichtung nach einem der Ansprüche 1 bis 9,
**dadurch gekennzeichnet,**
**dass** die Schlitten (22) zum relativen Verschieben der Mittel zum mechanischen Ergreifen der Platten auf elektromechanischem Weg entriegelt und / oder neu eingestellt und / oder wieder verriegelt werden.

11. Vorrichtung nach einem der Ansprüche 1 bis 10,
**dadurch gekennzeichnet,**
**dass** als Mittel zum Verhindern des Auffächerns eines Plattenpakets ein oder mehrere pneumatisch betätigter Andrückfinger (6) dienen.

12. Vorrichtung nach einem der Ansprüche 1 bis 10,
**dadurch gekennzeichnet,**
**dass** die Steuerungsvorrichtung beim Aufeinanderstellen von mehreren Plattenpaketen (13) zur Ablage zwischen zwei Plattenpaketen (13) passende Lagerleisten aus einem entsprechenden Magazin holen kann.

13. Verfahren zum maschinellen Erfassen und versandfertigen Abstellen von stoßempfindlichen Platten, wie Flachglas, unterschiedlichen Formats auf mindestens eine Stapelanordnung mittels einer Steuerungsvorrichtung in der Art eines mehrachsigen Roboterarms der eine Greifvorrichtung zum mechanischen Ergreifen der Platten aufweist,
aufweisend die folgenden Verfahrensschritte:
a) Ermitteln der geometrischen Abmessungen der zu transportierenden Platten (13) und Ergreifen der Platten (13) über mindestens eine Spannzange (3, 4),
b) Heranführen der zu transportierenden Platten (13) zum Abstellplatz und Absetzen,
c) Lockerung der mindestens einen Spannzange (3, 4),
d) Zurückfahren der Greifvorrichtung um eine Wegstrecke in eine Richtung, die vom Aufstellort wegführt, aus der ein Kippen der Platten (13) um einen Winkel resultiert,
e) Heranführen mindestens eines Andruckfingers (6) an die unteren Flächenteile zur Verhinderung einer Auffächerung der schräg gestellten Platten (13),
f) Umgreifen des kompakten Pakets aus schräg gestellten Platten (13) mit mindestens einer Spannzange (3, 4) und nachfolgendes Heranführen und bündiges Absetzen des Paktes an die Unterkante des Abstellplatzes,
g) Wegdrehen der mindestens einen Spannzange (4) aus dem oberen Aufstellbereich der Platten und folgendes Andrücken der schräg aufgestellten Platten an die Rückwand des Aufstellbereichs.

14. Verfahren nach Anspruch 13,
**dadurch gekennzeichnet,**
**dass** beim Aufeinanderstellen von mehreren Plattenpaketen (13) aus einem Magazin mit unterschiedlichen Lagerleistenformaten vor dem Aufstellvorgang automatisch passende Lagerleisten auf die vorherige Lage Plattenpakete zur Zwischenlage aufgelegt werden.

## Claims

1. Device for mechanically grasping and setting down impact-sensitive plates, such as flat glass, of various formats on at least one stack arrangement such that they are ready for dispatch,
wherein a control device in the form of a multi-axis robot arm has a gripping device and means for mechanically gripping the plates, the gripping device has means for determining the positional coordinates of the set-down position, and the gripping device has means for guiding the plates to the set-down position and depositing said plates there,
**characterized in that**
a) the gripping device is coupled to the control device such that it is suspended in an inclined position by means of an adjustable damping device (9),
b) the gripping device has slides (22) for displacing the means for mechanically gripping the plates,
c) the gripping device has means for determining the geometric dimensions of the plates to be grasped and for determining the set-down position of these plates

2. Device according to Claim 1,
**characterized**
**in that** at least one clamping jaw (3, 4) in conjunction with a clamping jaw support (5) is provided for mechanically gripping the plates.

3. Device according to Claim 2,
**characterized**
**in that** one or both sides of the clamping jaw supports (5) are coated with a layer which consists of a composite of cellular rubber, or a material with similar elasticity behavior, and a plastic, wherein the plastic represents the surface which makes direct contact with the plates.

4. Device according to one of Claims 1 to 3,
**characterized**
**in that** the gripping device is coupled to the control device such that it can be tilted at an angle of 5 degrees to 20 degrees, preferably of 7 degrees to 10 degrees.

5. Device according to Claim 4,
**characterized**
**in that** the adjustable damping device (9) can take over at least a large part of the weight of the gripping device.

6. Device according to one of Claims 2 to 5,
**characterized**
**in that** movements of the robot arm (25) unlock and/or fix the slides (22) for displacing the clamping jaws (3) and/or (4).

7. Device according to one of Claims 1 to 6,
**characterized**
**in that** it has sensors for acquiring all the data required for the movement sequences which occur.

8. Device according to Claim 7,
**characterized**
**in that** the sensors are ultrasonic sensors and/or sensors on the basis of electromagnetic processes and/or sensors that operate with electromagnetic waves.

9. Device according to one of Claims 1 to 8,
**characterized**
**in that**, in order to reduce weight, the gripping device is composed in part or entirely of lightweight materials such as GFP, aluminum or titanium.

10. Device according to one of Claims 1 to 9,
**characterized**
**in that** the slides (22) for the relative displacement of the means for mechanically gripping the plates are unlocked and/or reset and/or locked again by electromechanical means.

11. Device according to one of Claims 1 to 10,
**characterized**
**in that** one or more pneumatically actuated pressure fingers (6) are used as means for preventing a plate stack from fanning out.

12. Device according to one of Claims 1 to 10,
**characterized**
**in that**, when a plurality of plate stacks (13) are placed one on top of the other, the control device can select bearing strips suitable for deposition between two plate stacks (13) from a corresponding store.

13. Process for mechanically grasping and setting down impact-sensitive plates, such as flat glass, of various formats on at least one stack arrangement,
such that they are ready for dispatch, by means of a control device in the form of a multi-axis robot arm which has a gripping device for mechanically gripping the plates,
said process having the following process steps:
a) the geometric dimensions of the plates (13) to be transported are determined and the plates (13) are gripped via at least one collet chuck (3, 4),
b) the plates (13) to be transported are guided to the set-down position and deposited there,
c) the at least one collet chuck (3, 4) is loosened,
d) the gripping device is moved back by a distance in a direction which leads away from the positioning location, as a result of which the plates (13) are tilted by an angle,
e) at least one pressure finger (6) is guided along the lower parts of the surface in order to prevent the inclined plates (13) from fanning out,
f) at least one collet chuck (3, 4) reaches around the compact stack of inclined plates (13), and the stack is then guided and deposited in flush fashion on the bottom edge of the set-down position, and
g) the at least one collet chuck (4) is rotated away from the upper positioning region of the plates and the inclined plates are then pressed against the rear wall of the positioning region.

14. Process according to Claim 13,
**characterized**
**in that**, before the positioning operation, suitable bearing strips from a store containing various bearing strip formats are automatically placed on the previous layer of plate stacks as an intermediate layer when a plurality of plate stacks (13) are placed one on top of the other.

## Revendications

1. Dispositif pour saisir à la machine et déposer sous forme prête à expédier des plaques sensibles aux chocs, telles que du verre plat, de différents formats sur au moins un dispositif d'empilement, dans lequel un dispositif de commande du type d'un bras de robot multiaxial présente un dispositif de saisie et des moyens pour saisir mécaniquement les plaques, le dispositif de saisie présente des moyens pour déterminer les coordonnées de situation de l'emplacement de dépôt et le dispositif de saisie présente des moyens pour amener et déposer les plaques à l'emplacement de dépôt, **caractérisé en ce que**
a) le dispositif de saisie est articulé en position inclinée en suspension au dispositif de commande au moyen d'un dispositif d'amortissement réglable (9),
b) le dispositif de saisie présente des chariots (22) pour le déplacement des moyens pour saisir mécaniquement les plaques,
c) le dispositif de saisie présente des moyens pour la détermination des dimensions géométriques des plaques à saisir et pour la détermination de son emplacement de pose.

2. Dispositif selon la revendication 1, **caractérisé en ce qu'**il est prévu pour la saisie mécanique des plaques au moins une mâchoire de serrage (3, 4) en liaison avec un appui de mâchoire de serrage (5).

3. Dispositif selon la revendication 2, **caractérisé en ce que** les appuis de mâchoire de serrage (5) sont garnis sur un côté ou sur les deux côtés d'une couche qui se compose d'un composite de caoutchouc mousse, ou d'un autre matériau ayant un comportement élastique équivalent, et d'une matière plastique, dans lequel la matière plastique représente la face de contact direct avec les plaques.

4. Dispositif selon l'une quelconque des revendications 1 à 3, **caractérisé en ce que** le dispositif de saisie est articulé de façon pivotante au dispositif de commande sous un angle de 5 degrés à 20 degrés, de préférence de 7 degrés à 10 degrés.

5. Dispositif selon la revendication 4, **caractérisé en ce que** le dispositif d'amortissement réglable (9) peut reprendre au moins une grande partie du poids du dispositif de saisie.

6. Dispositif selon l'une quelconque des revendications 2 à 5, **caractérisé en ce que** les chariots (22) pour le déplacement des mâchoires de serrage (3) et/ou (4) sont déverrouillés et/ou fixés par des mouvements du bras de robot (25).

7. Dispositif selon l'une quelconque des revendications 1 à 6, **caractérisé en ce qu'**il présente des capteurs pour détecter toutes les données nécessaires pour l'exécution des mouvements à réaliser.

8. Dispositif selon la revendication 7, **caractérisé en ce que** les capteurs sont des capteurs à ultrasons et/ou des capteurs basés sur des processus électromagnétiques et/ou des capteurs opérant avec des ondes électromagnétiques.

9. Dispositif selon l'une quelconque des revendications 1 à 8, **caractérisé en ce que** le dispositif de saisie est constitué en totalité ou en parties de matériaux légers, tels que l'aluminium ou le titane, afin de réduire le poids.

10. Dispositif selon l'une quelconque des revendications 1 à 9, **caractérisé en ce que** les chariots (22) destinés au déplacement relatif des moyens pour saisir mécaniquement les plaques sont déverrouillés et/ou de nouveau réglés et/ou de nouveau verrouillés par voie électromagnétique.

11. Dispositif selon l'une quelconque des revendications 1 à 10, **caractérisé en ce qu'**un ou plusieurs doigts de pression à commande pneumatique (6) servent de moyens pour empêcher l'écartement d'un paquet de plaques.

12. Dispositif selon l'une quelconque des revendications 1 à 10, **caractérisé en ce que** le dispositif de commande peut, lors de la superposition de plusieurs paquets de plaques (13), aller chercher dans un magasin correspondant des réglettes d'appui aptes à être posées entre deux paquets de plaques (13).

13. Procédé pour saisir à la machine et déposer sous forme prête à expédier des plaques sensibles aux chocs, telles que du verre plat, de différents formats sur au moins un dispositif d'empilement au moyen d'un dispositif de commande du type d'un bras de robot multiaxial qui présente un dispositif de saisie pour saisir mécaniquement les plaques, présentant les étapes de procédé suivantes:
a) déterminer les dimensions géométriques des plaques à transporter (13) et saisir les plaques (13) au moyen d'au moins une pince de serrage (3, 4),
b) amener les plaques à transporter (13) à l'emplacement de dépôt et les déposer,
c) desserrer ladite au moins une pince de serrage (3, 4),
d) reculer le dispositif de saisie d'une distance dans une direction, qui part de l'endroit de placement, qui provoque une inclinaison des plaques (13) suivant un angle,
e) amener au moins un doigt de pression (6) contre les parties de surface inférieures pour empêcher un écartement des plaques posées en oblique (13),
f) enserrer le paquet compact de plaques posées en oblique (13) avec au moins une pince de serrage (3, 4) et ensuite amener et déposer le paquet à fleur de l'arête inférieure de l'emplacement de dépôt,
g) retirer ladite au moins une pince de serrage (4) de la région de placement supérieure des plaques puis appuyer les plaques placées en oblique contre la paroi arrière de la région de placement.

14. Procédé selon la revendication 13, **caractérisé en ce que**, lors de la superposition de plusieurs paquets de plaques (13), on pose des réglettes de support provenant d'un magasin automatiquement ajustées avec des formats de réglettes de support différents avant l'opération de placement sur la couche précédente de paquets de plaques en formant une couche intermédiaire.
